# EUROPÄISCHE PATENTSCHRIFT

(11) **EP 0 739 703 B1**
(45) Veröffentlichungstag und Bekanntmachung des Hinweises auf die Patenterteilung: **02.05.1997**
(21) Anmeldenummer: 95106387.4
(22) Anmeldetag: 27.04.1995
(51) Int. Cl.: B29C 49/18

(54) **Bodengeometrie von wiederverwendbaren PET-Behältern**
Bottom shape of reuseable PET containers
Fond de récipients réutilisables en PET

(43) Veröffentlichungstag der Anmeldung: 30.10.1996
(73) Patentinhaber: Continental PET Deutschland GmbH, 56743 Mendig (DE)
(72) Erfinder: Seul, Andreas, D-56743 Mendig (DE)
(74) Vertreter: Leonhard, Frank Reimund, Dipl.-Ing.

(56) Entgegenhaltungen:
- WO-A-86/03713
- WO-A-89/07554
- FR-A- 2 314 815

## Beschreibung

Die Erfindung befaßt sich mit der Gestaltung von Bodenflächen - in diesem technischen Gebiet "Bodengeometrie" genannt - an Kunststoff-Flaschen, die aus einer Preform (einem spritzgußgeformten Rohling) in zwei Blasformungen (Einbringen von hohem Druck) geformt werden. Diese Kunststoff-Flaschen sind heiß waschbar, dürfen sich also bei einer Temperatur von oberhalb 60°C oder 75°C von ihrer Geometrie her nicht spürbar verändern. Die genannte Temperatur betrifft die Temperatur der Waschflüssigkeit, bei der die Flaschen thermisch stabil bleiben müssen; geringe geometrische Verformungen, die die mechanische Stabilität oder die Standfestigkeit nicht beeinträchtigen, können toleriert werden (vgl. WO 86/03713, Seite 2 oben).

Zumeist werden die Kunststoff-Flaschen aus PET hergestellt, das in einer oder mehreren Schichten die Flaschenwandung bildet. Im Bodenbereich müssen die Flaschen sicher stehen und stabil gegen inneren Druck sein. Diese Stabilität betrifft die Gebrauchs-Stabilität. Eine andere Stabilität ist oben erwähnt und betrifft die Temperatur-Stabilität beim heißen Waschen der Flasche, also die Voraussetzung der Wiederverwendbarkeit. Eine zusätzliche Eigenschaft kommt nun dem Bodenbereich zu, er muß "inspektionsfähig" sein, womit der Fachmann in diesem technischen Gebiet den uneingeschränkten optischen Einblick in den Bodenbereich in Flaschenachse versteht. Diese Bodeninspektion darf nicht beeinflußt sein von Schatten und anderen Lichtbrechungen, weil dann eine visuelle Kontrolle der leeren Flasche mittels Kamera oder Auge nicht möglich ist.

Eine nicht praktisch inspizierbare Bodenform zeigt die FR-A-2314815 bzw. deren deutsche Korrespondenz DE-A-2626848. Dort wird in den Figuren 7-10 eine Umformung eines konvexen Flaschenbodens (dort 87) in einen konkavenFlaschenboden (dort 85) gezeigt, die mit axial verschiebbaren Ringen (dort 72, 73, 74) um einen mittigen Dorn (dort 65) erreicht wird. Durch die koaxialen Ringe entstehen eine Vielzahl ringförmiger Stufen in dem Flaschenboden, die in den Figuren 5, 8, 10 und 11 dieses Standes der Technik verdeutlicht werden.

**Aufgabe der Erfindung** ist es deshalb, eine Bodengeometrie an Kunststoff-Flaschen zur Verfügung zu stellen, die sowohl thermisch stabil ist als auch ohne Schatteneffekte ist, also vollumfänglich inspektionsfähig ist, um Restlauge (von der Reinigung) oder Fremdkörper im Behälter sicher und zuverlässig, also vollumfänglich, erkennen zu können, bevor die Flasche befüllt wird. Die Erfindung möchte dabei hinsichtlich der Inspektionsfähigkeit keine Einschränkungen des Bodendurchmessers in Kauf nehmen, wie das im Stand der Technik z.B. dadurch der Fall ist, daß Flaschen eine nach außen gerichtete, im wesentlichen halbkugelförmige Bodengeometrie erhalten und durch umfängliches Einziehen in einen Kunststoff-Stützring gestellt werden oder schon einen angeformten Aufstandsring haben (vgl. WO 89/7554), damit sie eine sichere Aufstandsfläche haben.

Bei dieser Lösung wird die Inspektionsfähigkeit verringert, weil der die radiale Einziehung des Flaschenunterteils verursachende Kunststoff-Standfuß optisch nicht durchlässig ist. Funktionell weist er eine solche Geometrie auf, die - selbst bei seiner optisch durchlässsigen Gestaltung - eine schattenfreie, vollumfängliche Inspektion durch den Boden im Leerzustand nicht erlauben würde.

Die vorgenannte Aufgabe **löst die Erfindung** durch die Verwendung eines kegelstumpfförmigen Bodeneinsatzes (Anspruch 1) oder durch ein Herstellverfahren, bei dem eine Preform in einer ersten Blasformung einen kegelstumpfförmigen Flaschenboden erhält, der nach Herausnehmen einen wellenförmigen Querschnitt aufweist (Anspruch 9) oder mit einer Vorrichtung zur Durchführung des erwähnten Verfahrens, in der ein Kegelstumpf-Boden in einer ersten Blasform vorgesehen ist und eine zweite Blasform einen im wesentlichen dom- oder kuppelförmigen Boden aufweist (Anspruch 11).

Der im wesentlichen kuppelförmige Boden des Anspruchs 11 ist von der Form her an die Bodengeometrie der aus der ersten Blasform herausgenommenen Flasche angepaßt (Anspruch 16), so daß in der zweiten Blasformung der Boden sich nur noch unwesentlich in seiner Geometrie verändert, lediglich in seinen grundsätzlich schon vorhandenen Formen verdeutlicht wird. Identität der Form heißt aber nicht Dimensionsidentität (von den Maßen her), sondern Gestaltungsidentität (relativer Ort der Teil-Formen und die Teil-Formen selbst).

Die grundsätzliche Architektur erhält der Boden nach dem Abnehmen vom kegelstumpfförmigen Formboden bzw. nach dem Schrumpfen, der ein Ablösen von diesem Formboden bewirkt. Überraschend hat sich dabei herausgestellt, daß die sich nach dem Abnehmen oder Schrumpfen ergebende Wellen-Struktur in dem Flaschenboden schon die Bodengestaltung ist, die volle optische Inspektion **ohne Schattenbildung** bei gleichzeitiger Temperaturstabilität erlaubt. Diese Geometrie des Flaschenbodens ist im Querschnitt wellenförmig, hat also eine zum Flascheninneren gerichtete erste Krümmung r', die im wesentlichen kugelsegmentförmig ist, und eine zweite, nach auswärts gerichtete Krümmung r'', die sich an die erste Krümmung r' anschließt.

Radial außerhalb der ersten Krümmung ist der Boden-Aufstandsring ausgebildet, auf dem die Flasche sicher stehen kann.

Der überraschende Effekt der Erfindung wird damit begründet, daß ein "Memory-Effekt" in dem linearen Bereich des Flaschenbodens genutzt wird, welcher sich nach Entfernen des ihn stützenden Kegelstumpfs selbsttätig wellenförmig ausbildet, wobei der Flaschenboden im wesentlichen eigen-spannungsfrei wird.

In einer zweiten Blasformung kann dieser schon wellenförmig ausgebildete Boden noch verdeutlicht werden, wenn er auf einem zweiten Formboden der Blasform erneut blasgeformt wird. Dieser hat dabei die im wesentlichen selbe Gestaltung, wie der Flaschenboden, der sich nach dem ersten Blasformen und dem Abnehmen von dem Kegelstumpf-Formboden bildet, so daß nur noch geringe Verformungen auftreten (Anspruch 16). Eine davon kann eine gewölbt ausgebildete Kuppel sein, die dem oberen Plateaubereich des Kegelstumpfes (Anspruch 8) - abgebildet im Flaschenboden - entspricht (Anspruch 17,7).

Zwischen den beiden Krümmungen des sich nach der ersten Blasformung ergebenden Flaschenbodens befindet sich ein Wendepunkt, der erkennbar nach innen verschoben ist, woraus sich ergibt, daß die erste (äußere) Krümmung deutlicher ausgeprägt ist als die zweite (innere) Krümmung der Geometrie des Flaschenbodens. Entsprechend ist auch der zweite Formboden ausgebildet, wohingegen der erste Formboden mit seiner Mantelfläche für die erste Blasformung im wesentlichen linear (oder: eben) gestaltet ist.

Der Winkel, unter dem sich der Kegelstumpf mit seiner ebenen Mantelfläche erstreckt, kann zwischen 40° und 70° liegen, vorteilhaft verläuft er unter 60° (Anspruch 4,5).

Der kegelstumpfförmige Boden der ersten Blasform kann als Einsatz gestaltet sein (Anspruch 1), er kann aber auch einstückig mit der Blasform, deren Formboden er bildet, gestaltet sein (Anspruch 1, Anspruch 11).

Der Zweistufen-Blasformungs-Prozeß, der erkennbar angesprochen wird, betrifft die Preform, die in einem ersten Blasformungs-Schritt in einer ersten Form unter Druck zu einem Zwischenbehälter geformt wird. Der Zwischenbehälter kann deutlich größer sein als der endgültig angestrebte Behälter. Der Zwischenbehälter wird durch Schrumpfen auf eine Größe gebracht, die unterhalb derer liegt, die endgültig beabsichtigt ist. In einer zweiten Form erhält der geschrumpfte Zwischenbehälter seine endgültige Form. Gleichwohl bleibt der Boden in seiner wellenförmigen Gestalt mathematisch ähnlich, was eine durch Schrumpfen bewirkte Maßveränderung einschließt, eine Gestaltungsidentität aber beibehält.

Beide Blasformungs-Schritte können so ausgestaltet sein, daß die Flaschen bzw. Zwischenbehälter für jede Blasformung auf jeweils einem Speicherrad abnehmbar angeordnet sind (Anspruch 13, 14), so daß sie einfach geformt und stetig gekühlt werden können.

Ergänzend zu dem sich überraschend ergebenden vollinspektionsfähigen Behälterboden mit kegelstumpfförmigem ersten Boden zeigt sich auch die Möglichkeit, daß Kunststoff eingespart werden kann. Erste Berechnungen haben gezeigt, daß bis zu 10% Material eingespart werden kann, wenn der Behälter mit einem linearen Kegelstumpfmantel des Blasform-Bodens ausgebildet wird und sich nach Abnehmen von diesem Boden eigenständig und ohne weitere Einflüsse in einen Flaschenboden verformt, der schon im wesentlichen diejenige Gestalt hat, die die endgültige Flasche später - nach Abformung auf dem zweiten Formboden - erhalten soll.
Aufwendige Umformungen des Behälterbodens zur Sicherstellung sowohl der Temperaturstabilität, der Standfestigkeit als auch der vollen Inspektionsfähigkeit ohne Schattenbildung können unterbleiben, so daß zusätzliche Krümmungen und Wellungen vermieden werden. Ein künstlicher Ausgleich von Verspannungen ist deshalb entbehrlich.

Besonders stark kommt die Materialersparnis zum Tragen, wenn mit der Erfindung die bisher dickeren Böden von Kunststoff-Flaschen dünner gestaltet werden können und gleichwohl thermische Stabilität im Bodenbereich beibehalten wird.

Die Erfindung wird nachfolgend anhand mehrerer Ausführungs**beispiele** erläutert und ergänzt.
- **Figur 1**: ist ein Beispiel eines Kegelstumpf-Bodens 1 mit einer linearen Mantelfläche 1a und einem am unteren Ende stetig auslaufenden Ring-Einschnürungsbereich 1b und einem oberen ebenen Plateau 1c.
- **Figur 1a**: ist das Gegenstück zu Figur 1. Es ist ein Ausschnitt aus einer sich nach aufwärts, längs der Achse 100 erstreckenden PET-Flasche, namentlich des nach innen gewölbten Bodenbereichs 10, der am unteren Ende eine Ring-Aufstandsfläche oder -linie 10r aufweist. Von dieser Aufstands-Fläche aufwärts erstreckt sich die Außenwandung der Flasche, die hier nicht weiter dargestellt ist.
- **Figur 2**: ist der zweite Bodeneinsatz oder die zweite Bodenform 20, die mit ihrer Oberflächen-Kontur kuppel- oder glockenförmig ausgebildet ist und eng an die in Figur 1a abgebildete Bodenarchitektur 10 angepaßt ist.
- **Figur 2a**: ist die Bodengeometrie der Flasche, nach ihrer Blasformung auf dem in Figur 2 abgebildeten Formboden 20, wobei die in Figur 1a schon erkennbare wellenförmige Geometrie 10',10'',10w hier bei unverändertem Wendepunkt 10w eine verdeutlichte Wellengeometrie 10'und 10'' aufweist.
- **Figur 3**: repräsentiert den Stand der Technik, bei dem der Formboden-Einsatz 30 deutlich domförmig gewölbt ist, um der Flasche in der ersten Blasformung eine schon stark ausgeprägt kuppelförmige Form zu geben.
- **Figur 3a**: repräsentiert die Bodengeometrie, wie sie nach Schrumpfen des von dem Bodeneinsatz gemäß Figur 3 abgenommenen Behälters und erneutem Blasformen (der zweiten Blasformung) ausgebildet wird, wobei der Bereich E in den Figuren 3b und 3c verdeutlicht ist.
- **Figur 3b, Figur 3c**: veranschaulichen den axialen Blick L längs der Achse 100 von Figur 3a und einen Ausschnitt des Querschnitts von Figur 3a, der dort mit E bezeichnet wird. Hier sind die Schattenbildungen erkennbar, die bei der Bodengeometrie entstehen, deren erste Blasformung von dem Bodeneinsatz in Figur 3 prägend beeinflußt wird.

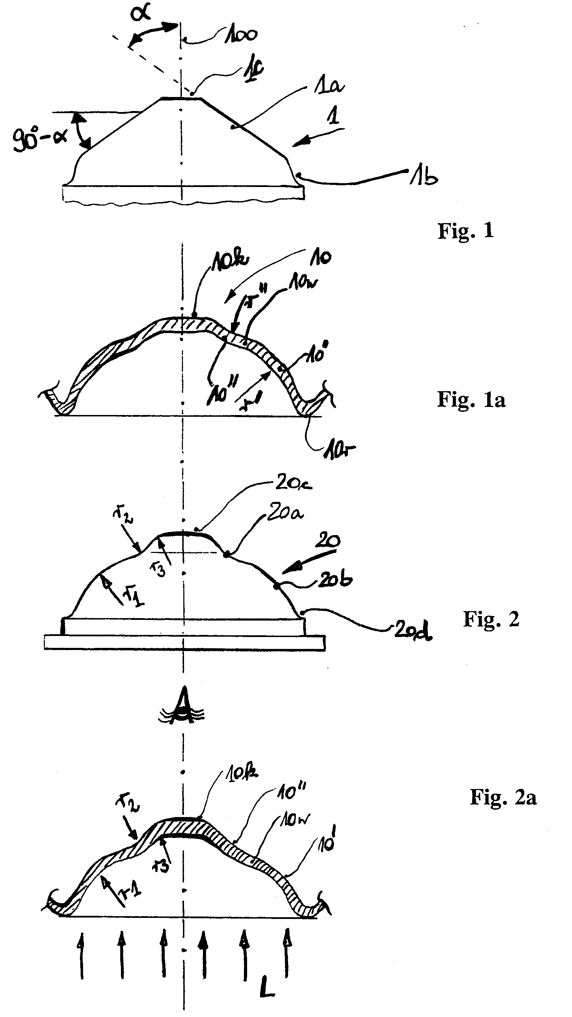

**In Figur 1** ist unter einem Winkel α gegenüber der Vertikalen (der Flaschenachse 100) eine Mantelfläche 1a eingezeichnet, die im wesentlichen geradflächig verläuft. Der Formbodeneinsatz 1 enthält am inneren Ende der geraden Mantellinie ein ebenes Plateau 1c, das in der Horizontalen verläuft. Am unteren, äußeren Ende der geraden Mantelfläche 1a ist ein Ring-Einschnürungsabschnitt 1b gezeigt, der zur Ausführung der Ring-Aufstandsfläche 10r dient. Eine erste Blasformung bewirkt ein Andrücken des Bodenabschnittes der Preform auf den Kegelstumpf-Boden 1 von Figur 1. Es entsteht ein unter dem Winkel α geneigter, im wesentlichen gerade verlaufender Bodenabschnitt, der sich nach Schrumpfen der Flasche oder Abziehen der Flasche vom Boden gemäß Figur 1 in eine Bodengeometrie eigenständig und ohne äußere Einflüsse wandelt, wie sie in Figur 1a gezeigt ist. Diese Bodengeometrie entsteht überraschend aufgrund von Lösen innerer Spannungen nach der ersten Blasformung, dem sogenannten "Memory-Effekt" der Preforms nach dem Streckblasen, welche Eigenspannung durch den linearen, schräg gestellten Mantel genau so erzeugt wird, daß sich die wellenförmige Gestalt ausbildet.

Erkennbar ist an der Geometrie eine im Querschnitt wellenförmige Architektur, bei der eine erste, äußere Krümmung 10' mit einem Radius r' ausgebildet wird, die von der Aufstandssicke 10r bzw der Ring-Aufstandsfläche 10r nach innen gerichtet ausgebildet wird.

Sie mündet in einem Wendepunkt 10w, von dem ausgehend eine entgegengesetzt gerichtete Krümmung 10'' mit einem kleineren Radius r'' gebildet wird, der in ein scheibenförmiges Plateau 10k überleitet. Das Plateau kann flach sein oder leicht gewölbt. Die sanfte Überleitung von der oberen Krümmung r2 zum Plateau wird über eine dritte Krümmung r3 erreicht.

Mit dieser Geometrie wird im wesentlichen ein nach innen gewölbter Boden schon erreicht, obwohl der Bodeneinsatz 1 eine ganz andere Bodengeometrie erwarten lassen würde, als sich nach wesentlichem Ausgleich der inneren Spannungen tatsächlich ergibt.

**Figur 2** zeigt einen zweiten Bodeneinsatz 20, der in seiner Architektur eng an die entstehende Bodengestaltung der Flasche, die in Figur 1a gezeigt ist, angepaßt ist. Ebenso wie in Figur 1a sind auch hier zwei entgegengesetzt gerichtete Radien r1 und r2 zugegen, die einen ersten gekrümmten Bereich 20b und einen entgegengesetzt gekrümmten zweiten Bereich 20a definieren, welch letzterer radial weiter innen liegt, als der zuerst genannte. Der innere gekrümmte Bereich 20a leitet über in eine schwach gewölbte, abgesetzte Kuppel 20c, die dem Plateau 10k der Figur 1a in ihrer Radial-Erstreckung angepaßt ist. Der äußere gekrümmte Bereich 20b, der Kugelschicht-Form aufweist, leitet über in den - den inneren Bereich der Aufstandssicke 10r definierenden - Formteil-Abschnitt.

Das Ergebnis des zweiten Streckblas-Vorgangs (Blasform-Vorganges) ist **in Figur 2a** gezeigt, wo die schon in Figur 1a ihrem Wesen nach begründete Bodengeometrie deutlicher ausgeprägt wird, aber nicht wesentlich verändert wird.

Die Geometrien der Figuren 1a,2a sind im wesentlichen "ähnlich" (im mathematischen Sinne).

Die zuletzt genannte Bodengeometrie hat eine uneingeschränkte Inspektionsfähigkeit, die durch die vertikal eingezeichneten Pfeile L - parallel zur Zentralachse 100 - angedeutet wird. Kein Bereich des sich in radialer Richtung wellenförmig (im Querschnitt) erstreckenden eingezogenen Bodens zeigt Schatten S. Ohne Schatten kann sichergestellt werden, daß Laugenreste oder verbleibende Verschmutzungen im Flascheninneren - nach dem heißen Waschen - sicher erkannt werden.

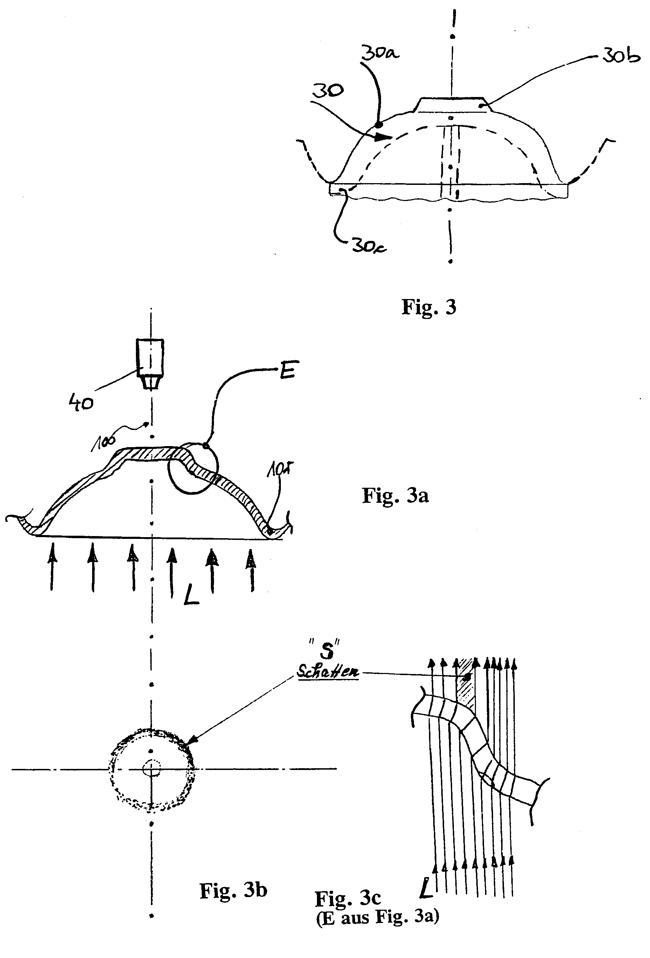

Die Schattenbildung S eines Standes der Technik ist **in Figuren 3b, 3c** verdeutlicht, auch ist derjenige Bereich **in Figur 3a** angegeben, der diesen Schattenbereich S - als ringförmige Verdunkelungszone in Figur 3b repräsentiert - verursacht. Eine Kamera 40, die eine Linse aufweist, die so ausgestaltet ist, daß der gesamte Bodenbereich innerhalb des Aufstands-Ringes 10r abgebildet wird, würde den Ring gemäß Figur 3b als Abbild zeigen. In diesem Bereich ist eine nur eingeschränkte optische Kontrolle - eine eingeschränkte Inspektionsmöglichkeit - begründet, so daß dieser Bodenbereich nicht das leistet, was mit dem Bodenbereich gemäß der Figur 2b nur unter Zuhilfenahme eines kegelstumpfförmigen Bodens 1 gemäß Figur 1 erreicht wird.

Nur zu Veranschaulichungszwecken wird das Gegenstück zu Figur 1 **in Figur 3** abgebildet, mit dem im Stand der Technik der Bodenbereich im ersten Blasformungs-Schritt gebildet wird, der im zweiten Blasformungs-Schritt zu der Bodengeometrie gemäß Figur 3a führt. Dort ist ein beherrschendes Kugelsegment 30a erkennbar, das nahezu den gesamten Bodenbereich einnimmt und dem Boden eine nur einwärts gekrümmte Architektur innerhalb der Aufstandssicke 30c bzw. 10r verleiht. Diese domförmige Struktur wird mit einem zweiten - hier nicht dargestellten - Bodeneinsatz erst in eine Geometrie überführt, die thermische Stabilität, mechanische Festigkeit aber nur eingeschränkte, nicht optimale Inspektionsfähigkeit bietet.

Der in Figur 1 dargestellte Winkel α, der der Neigung der Mantelfläche 1a des Kegelstumpfes aus der Vertikalen entspricht, ist etwa 60°; er kann leicht nach aufwärts oder abwärts verändert werden, wobei sich nach wie vor die überraschende und eigenständige wellenförmige Verformung des von dem Kegelstumpf abgelösten Bodens zeigt. Außerhalb der erwähnten Bereiche findet die selbständige Verformung - erreicht über den "Memory-Effekt" - nicht statt.

## Patentansprüche

1. **Verwendung** eines kegelstumpfförmigen (1a,1b) Formbodens oder Bodeneinsatzes (1) mit ebener Mantelfläche (1a) für die erste Blasformung eines Kunststoffbehälters mit nach innen gerichtetem domförmigem Boden (10;10',10'',10k,10w,10r).

2. Verwendung nach Anspruch 1, bei der mit einem zweiten Formboden oder Bodeneinsatz (20) in einer zweiten Blasformung der domförmige Boden (10) mit einem Kugelsegment, insbesondere einer Kugelschicht (10'), mit erstem Radius (r1) und mit einer oberen Krümmung (10'') mit zweitem Radius (r2) deutlicher ausgeprägt oder nachgeformt wird, wobei die Krümmungen (r1,r2) gegeneinander gerichtet sind.

3. Verwendung nach einem der vorigen Ansprüche, bei der der erste Radius (r1) deutlich größer ist als der zweite Radius.

4. Verwendung nach einem der vorigen Ansprüche, bei der der Mantel (1a) des Kegelstumpfes (1) einen Winkel (α) von 40° bis 70° gegenüber der Flaschenachse (100) hat ("etwa 60°").

5. Verwendung nach Anspruch 4, bei der die Mantelfläche (1a) unter 60° verläuft.

6. Verwendung nach einem der vorigen Ansprüche, bei der der Bodeneinsatz oder Formboden metallisch ist.

7. Verwendung nach einem der Ansprüche 2 bis 6, bei der mit dem zweiten Formboden oder Bodeneinsatz (20) der dem Plateaubereich (1c) des ersten Formboden oder Bodeneinsatzes (10) entsprechende Boden-Zentralbereich (10k) des Flaschenbodens leicht gewölbt wird.

8. Verwendung nach einem der vorigen Ansprüche, bei der
(a) der Kegelstumpf (1) einen im wesentlichen ebenen oder leicht gewölbten Plateaubereich (1c) aufweist; und/oder
(b) am unteren Ende der Mantelfläche (1a) des Kegelstümpfes eine umlaufende, nach innen gerichtete Ausformung (1b) vorgesehen ist.

9. **Herstellverfahren** für bodenseitig inspektionsfähige und heiß waschbare Kunststoff-Flaschen, insbesondere aus PET, bei dem
(a) in einer ersten Blasformung der Bodenbereich (10) der Flasche auf einen nach innen gerichteten Kegelstumpf (1) aufgeformt wird;
(b) der abgeformte kegelstumpfförmige Flaschenboden nach Herausnehmen aus der Form oder Schrumpfen - im Querschnitt - selbstätig eine Wellung (10',10'',10w) erhält, deren Wendepunkt (10w) axial höher liegt als der Boden-Aufstandsring (10r) der Flasche (10).

10. Herstellverfahren nach Anspruch 9, bei der die Wellung (10w,10',10'') allein durch Trennen von Flaschenboden (10) und Kegelstumpf (1) gebildet wird, wodurch der Flaschenboden (10) im wesentlichen spannungsfrei wird.

11. **Vorrichtung** zur Durchführung des Verfahrens nach einem der Ansprüche 9 oder 10, mit
(a) einer ersten Blasform mit Kegelstumpf-Boden (1; 1c,1a,1b), in der eine Kunststoff-Preform bei einer erhöhten Temperatur unter erhöhtem Druck ausformbar ist, wobei der Kegelstumpf des Bodens eine ebene Mantelfläche (1a) aufweist;
(b) einer Stellvorrichtung, die die erste Blasform öffnet, um das Schrumpfen des in der ersten Blasform geformten Zwischenbehälters zu ermöglichen;
(c) einer zweiten Blasform mit im wesentlichen dom- oder kuppelförmigem Boden (20;20a,20b,20c,20d).

12. Vorrichtung nach Anspruch 11, bei welcher der oder die Böden (20;1) der Blasform(en) als metallischer Einsatz ausgebildet sind.

13. Vorrichtung nach Anspruch 11 oder 12, bei der die Zwischenbehälter und die fertig geformten Behälter auf jeweils einer Speichereinrichtung zu mehreren verteilt angeordnet sind.

14. Vorrichtung nach Anspruch 13, bei der die Behälter abnehmbar auf der jeweiligen Speichereinrichtung angeordnet sind.

15. Vorrichtung nach Anspruch 11 bis 14, bei welcher der oder die Hohlräume der Blasform(en) flaschenförmig ausgebildet sind.

16. Vorrichtung nach einem der Ansprüche 11 bis 15, bei der der dom- oder kuppelförmige Boden (20) der zweiten Blasform an die Bodengeometrie der aus der ersten Blasform herausgenommenen - oder an die nach Schrumpfen entstandenen - Flaschen angepaßt ist.

17. Vorrichtung nach Anspruch 16, bei der der obere Plateaubereich des zweiten Bodens (20) leicht gewölbt ist und/oder in seinem unteren Bereich eine erste, nach außen gerichtete Krümmung (r1) und im leichten Abstand vom Kuppelzentrum (20c) eine zweite, nach innen gerichtete Krümmung (r2) aufweist.

## Claims

1. Use of a frusto-conical (1a, 1b) shaped base or base insert (1) with a flat surface (1a) for initial blow-moulding of a plastic container with an inwardly extending domed base (10; 10', 10'', 10k, 10w, 10r).

2. Use according to claim 1, wherein by means of a second shaped base or base insert (20) and in a second blow-moulding operation, the domed base (10) is stamped or subsequently shaped in a more well-defined manner so as to have a spherical segment, especially a spherical layer (10') having a first radius (r1) and an upper curvature (10'') having a second radius (r2), the curvatures (r1, r2) being in opposite directions.

3. Use according to any of the preceding claims, wherein the first radius (r1) is appreciably greater than the second radius.

4. Use according to any of the preceding claims, wherein the surface (1a) of the truncated cone (1) is at an angle (α) of 40° to 70° ("about 60°") to the bottle axis (100).

5. Use according to claim 4, wherein the surface (1a) extends at 60°.

6. Use according to any of the preceding claims, wherein the base insert or shaped base is of metal.

7. Use according to any one of claims 2 to 6, wherein, by means of the second shaped base or base insert (20), the central region (10k) of the bottle base corresponding to the flat region (1c) of the first shaped base or base insert (10) is slightly curved.

8. Use according to any of the preceding claims, wherein
(a) the truncated cone (1) has a substantially flat or slightly curved flat region (1c); and/or
(b) a peripheral inwardly extending shape (1b) is provided at the bottom end of the surface (1a) of the truncated cone.

9. A method of manufacturing plastics material, especially PET, bottles which can be inspected from the bottom end and can be washed when hot, wherein:
(a) in a first blow-moulding operation the base region (10) of the bottle is shaped on an inwardly extending truncated cone (1);
(b) the shaped frusto-conical bottle base, after being taken out of the mould or shrinking in cross-section, automatically acquires a prolongation (10', 10'', 10w) having a turning-point (10w) which is axially higher than the ring (10r) on which the bottom of the bottle (10) rests.

10. A method of manufacture according to claim 9, wherein the corrugation (10w, 10', 10'') is formed solely by cutting the bottle base (10) from the truncated cone (1), with the result that the bottle base (10) is substantially free from tension.

11. A device for working the method according to claim 9 or claim 10, comprising:
(a) a first blow mould with a truncated conical bottom (1; 1c, 1a, 1b) in which a plastics material preform can be shaped at elevated temperature and elevated pressure, the truncated conical bottom having a flat surface (1a);
(b) an adjusting device which opens the first blow mould in order to enable the semi-finished container shaped in the first blow mould to shrink, and
(c) a second blow mould having a substantially domed or vaulted base (20; 20a, 20b, 20c, 20d).

12. A device according to claim 11, wherein the base or bases (20; 1) of the blow mould or moulds are in the form of a metal insert.

13. A device according to claim 11 or claim 12, wherein the semi-finished container and the finally shaped container are each distributed in groups on a respective storage device.

14. A device according to claim 13, wherein the containers are removably disposed on the respective storage device.

15. A device according to claims 11 to 14, wherein the cavity or cavities in the blow mould or moulds are bottle-shaped.

16. A device according to any of claims 11 to 15, wherein the dome or vault shaped base (20) of the second blow mould is adapted to the geometry of the base of the bottles taken out of the first blow mould or after shrinkage.

17. A device according to claim 16, wherein the flat region at the top of the second base (20) is slightly curved and/or has a first, outwardly extending curvature (r1) in its bottom region and a second, inwardly extending curvature (r2) at a short distance from the centre (20c) of the vault.

## Revendications

1. Utilisation d'un fond de moule ou d'un insert de fond (1) de forme tronconique (1a,1b) avec une surface d'enveloppe lisse (1a) pour le premier façonnage par soufflage sur matrice d'un récipient en matière plastique comportant un fond en forme de dôme dirigé vers l'intérieur (10; 10',10'',10k,10w,10r).

2. Utilisation selon la revendication 1, dans laquelle, au cours d'un deuxième façonnage par soufflage sur matrice avec un deuxième fond de moule ou insert de fond (20), le fond en forme de dôme (10) est nettement marqué ou post-formé avec un segment sphérique, en particulier une zone sphérique (10'), ayant un premier rayon (r1) et avec une incurvation supérieure (10'') ayant un deuxième rayon (r2), les courbures (r1,r2) étant dirigées l'une contre l'autre.

3. Utilisation selon l'une des revendications précédentes, dans laquelle le premier rayon (r1) est nettement plus grand que le deuxième rayon.

4. Utilisation selon l'une des revendications précédentes, dans laquelle l'enveloppe (1a) du tronc de cône (1) forme un angle (α) de 40° à 70° par rapport à l'axe de la bouteille ( "environ 60°").

5. Utilisation selon la revendication 4, dans laquelle la surface d'enveloppe (1a) s'étend sous 60°.

6. Utilisation selon l'une des revendications précédentes, dans laquelle l'insert de fond ou le fond de moule est métallique.

7. Utilisation selon l'une des revendications 2 à 6, dans laquelle, avec le deuxième fond de moule ou insert de fond (20), la région centrale de fond (10k) du fond de bouteille correspondant à la zone de plateau (1c) du premier fond de moule ou insert de fond (10) est légèrement bombée.

8. Utilisation selon l'une des revendications précédentes, dans laquelle
(a) le tronc de cône (1) comporte une zone de plateau (1c) essentiellement plane ou légèrement bombée; et/ou
(b) à l'extrémité inférieure de la surface enveloppe (1a) du tronc de cône est prévue une mise en forme (1b) périphérique dirigée vers l'intérieur.

9. Procédé de fabrication pour des bouteilles en matière plastique lavables à chaud et aptes à subir une inspection par le fond, en particulier en PET, dans lequel
(a) lors d'un premier façonnage par soufflage sur matrice la zone de fond (10) de la bouteille est mise en forme sur un tronc de cône (1) dirigé vers l'intérieur;
(b) le fond de bouteille formé en tronc de cône après retrait du moule ou contraction - en section transversale- reçoit automatiquement une ondulation (10',10'',10w) dont le point de changement de direction (10w) se trouve plus haut axialement que l'anneau d'appui, en station debout,du fond (10r) de la bouteille.

10. Procédé de fabrication selon la revendication 9, dans lequel l' ondulation ( 10w,10',10'') est formée uniquement par séparation du fond de bouteille (10) et du tronc de cône (1), grâce à quoi le fond de bouteille (10) est essentiellement libre de contraintes.

11. Dispositif pour l'exécution du procédé selon l'une des revendications 9 ou 10, comportant
(a) un premier moule de soufflage avec un fond en tronc de cône (1,1c,1a,1b), dans lequel une préforme en matière plastique peut être mise en forme sous une température élevée sous pression élevée, le tronc de cône du fond présentant une surface d'enveloppe (1a) lisse;
(b) un dispositif de commande, qui ouvre le premier moule de soufflage, pour permettre la contraction du récipient intermédiaire formé dans le premier moule de soufflage;
(c) un deuxième moule de soufflage avec un fond essentiellement en forme de dôme ou de coupole ( 20; 20a,20b,20c,20d ).

12. Dispositif selon la revendication 11, dans lequel le ou les fonds (20;1) du ou des moules de soufflage sont réalisés en tant qu'insert métallique.

13. Dispositif selon la revendication 11 ou 12, dans lequel les récipients intermédiaires et les récipients moulés achevés sont disposés répartis à plusieurs sur respectivement un dispositif de stockage.

14. Dispositif selon la revendication 13, dans lequel les récipients sont disposés sur leur dispositif de stockage respectif de manière à pouvoir être enlevés.

15. Dispositif selon la revendication 11 à 14, dans lequel la ou les cavités du (des) moule(s) de soufflage sont réalisées en forme de bouteille.

16. Dispositif selon l'une des revendications 11 à 15, dans lequel le fond en forme de dôme ou de coupole (20) du deuxième moule de soufflage est adapté à la géométrie de fond des bouteilles extraites du premier moule de soufflage - ou à la géométrie des bouteilles obtenues après contraction .

17. Dispositif selon la revendication 16, dans lequel la zone de plateau supérieure du deuxième fond (20) est légèrement bombée et/ou ce fond comporte dans sa zone inférieure une première courbure (r1) dirigée vers l'extérieur et à faible distance du centre de la coupole (20c) une deuxième courbure (r2) dirigée vers l'intérieur.
